(19) Europäisches Patentamt
European Patent Office
Office européen des brevets

(11) **EP 1 509 382 B1**

(12) **EUROPÄISCHE PATENTSCHRIFT**

(45) Veröffentlichungstag und Bekanntmachung des Hinweises auf die Patenterteilung:
**31.07.2013 Patentblatt 2013/31**

(21) Anmeldenummer: 03756945.6

(22) Anmeldetag: **20.05.2003**

(51) Int Cl.:
**B29C 67/00** *(2006.01)*　　　B29C 67/24 *(2006.01)*

(86) Internationale Anmeldenummer:
**PCT/DE2003/001636**

(87) Internationale Veröffentlichungsnummer:
**WO 2003/103932 (18.12.2003 Gazette 2003/51)**

(54) **VERFAHREN ZUM SCHICHTWEISEN AUFBAU VON MODELLEN**

METHOD FOR CONSTRUCTING PATTERNS IN A LAYERED MANNER

PROCEDE DE FABRICATION DE MODELES EN COUCHES

(84) Benannte Vertragsstaaten:
**AT BE BG CH CY CZ DE DK EE ES FI FR GB GR HU IE IT LI LU MC NL PT RO SE SI SK TR**

(30) Priorität: **05.06.2002 DE 10224981**

(43) Veröffentlichungstag der Anmeldung:
**02.03.2005 Patentblatt 2005/09**

(73) Patentinhaber: **Voxeljet Technology GmbH 86316 Friedberg (DE)**

(72) Erfinder:
• **EDERER, Ingo 82269 Geltendorf (DE)**
• **HÖCHSMANN, Rainer 86682 Genderkingen (DE)**

(74) Vertreter: **Helbig, Christian et al Wagner + Helbig Patentanwälte Pfarrstrasse 14 80538 München (DE)**

(56) Entgegenhaltungen:
**EP-A- 1 163 999　　　WO-A-02/064354
WO-A2-01/34371　　　US-A- 5 387 380
US-A1- 2002 026 982　　US-A1- 2002 029 094
US-B1- 6 401 001**

EP 1 509 382 B1

**Beschreibung**

Die vorliegende Erfindung bezieht sich auf ein Verfahren zum schichtweisen Aufbau von Modellen oder/und Formen nach dem Oberbegriff des Patentanspruches 1.

Aus dem Stand der Technik ist es bekannt bei der werkzeuglosen Herstellung von Gießformen oder Gussmodellen das Rapid-Prototyping-Verfahren zu verwenden.

Aus der DE 198 53 834 A1 ist beispielsweise ein Rapid-Prototyping-Verfahren insbesondere zum Aufbauen von Gussmodellen bekannt. Bei diesem Verfahren wird unbehandeltes Partikelmaterial, wie Quarzsand, auf eine Bauplattform in einer dünnen Schicht aufgetragen. Danach wird mit Hilfe einer Spray-Vorrichtung ein Bindemittel auf das gesamte Partikelmaterial in möglichst feiner Verteilung aufgesprüht. Anschließend wird darüber auf ausgewählte Bereiche Härter dosiert, wodurch erwünschte Bereiche des Partikelmaterials verfestigt werden. Nach mehrmaliger Wiederholung dieses Vorgangs kann ein individuell geformter Körper aus dem gebundenen Partikelmaterial bereitgestellt werden. Dieser Körper ist zunächst in dem umliegenden, ungebundenen Partikelmaterial eingebettet und kann nach Abschluss des Bauvorganges aus dem Partikelbett entnommen werden.

Wird beispielsweise bei einem derartigen Rapid-Prototyping-Verfahren als Partikelmaterial ein Quarzsand verwendet und als Bindemittel ein Furanharz, kann mit Hilfe einer schwefeligen Säure als Härter eine Gussform hergestellt werden, die aus üblicherweise bei der Formherstellung verwendeten und daher dem Fachmann bekannten Materialien besteht.

Bei derartigen Rapid-Protoyping-Verfahren muss, wie beschrieben wurde, zuerst das Partikelmaterial, dann das Bindemittel und daran anschließend der Härter aufgetragen werden. Dies erfordert für jede Schicht ein dreimaliges Auftragen von Materialien und ist damit sehr zeitintensiv.

Es wurde schon seit längerer Zeit versucht, zumindest einen Beschichtungsschritt zum Verkürzen der Herstellungszeit des Modelles zu eliminieren.

So wird beispielsweise in der EP 0 711 213 B1 ein weiteres Rapid-Prototyping-Verfahren beschrieben, nämlich das selektive Lasersintern. Hierbei wird als Parikelmaterial Croningsand, das heißt warmumhüllter Gießereisand mit Resol- oder Novolack-Harz, verwendet. Das bedeutet, es muss nur das mit Harz versehene Partikelmaterial aufgetragen werden und die Auftragung des Bindemittels entfällt. Es können dabei ebenso gießereiübliche Materialien verwendet werden und damit aus üblichen, dem Fachmann geläufigen Materialien bestehende Gussmodelle hergestellt werden.

Allerdings weist dieses Herstellungsverfahren auch erhebliche Nachteile auf. So wird das Harz im Sand während des Belichtungs-Prozesses nicht vollständig gehärtet. Dies führt zu einer geringeren sogenannten Grünteilfestigkeit der hergestellten Formen. Erst nach dem Entfernen des losen Sandes und einem anschließenden Ofenprozess wird die gewünschte Festigkeit erzielt. Neben dem zusätzlichen Verfahrensschritt im Ofen besteht beim Entsanden und Handling der "Grünlinge" eine hohe Bruchgefahr. Während des Ofenprozesses kann zudem ein unerwünschter Verzug der Bauteile auftreten.

Daneben weisen Croningsande eine relativ hohe thermische Stabilität auf, die bei den relativ geringen Gießtemperaturen beim Leichtmetallguss zu einer schlechten Entkernbarkeit führt.

Für das selektive Lasersintern sind zudem Croningsande mit erhöhtem Binderanteil erforderlich. Die Folge davon sind größere Gasmengen während der Pyrolyse des Binders beim ??? des Abgusses und damit eine erhöhte Ausschuss-Gefahr wegen Lunkern im Bauteil.

Darüber hinaus weist das selektive Lasersintern im Allgemeinen den Nachteil auf, dass der Laser einen hohen Aufwand erfordert und daneben der Belichtungsschritt auch relativ zeitintensiv ist.

Auch stehen für das selektive Lasersintern eine nur sehr eingeschränkte Auswahl an Sandsorten und Körnungen zur Verfügung so dass dieses Verfahren auch wenig flexibel ist.

Aus der US 5,204,055 beziehungsweise der EP 0 431 924 B1 ist ein sogenanntes 3D-Drucken bekannt. Hierbei wird Partikelmaterial durch den Eintrag von Bindermaterial selektiv verklebt. Dieses Verfahren weist den Vorteil auf, dass es gegenüber dem selektiven Lasersintern auf einer kostengünstigen Drucktechnologie basiert.

Allerdings können typische gießereiübliche Binder wegen der ungünstigen Stoffeigenschaften nur unter hohem technischen Aufwand dosiert werden. Es besteht zudem die Gefahr, dass die Düsen zum Dosieren des Bindemittels verkleben und ausfallen.

Durch einen Tropfeneintrag des Bindemittels ist die Durchmischung des Binders im Bauteil sehr schlecht. Um zu vergleichbaren Festigkeiten wie bei konventionell angemischten Sanden zu kommen, müssen wesentlich höhere Bindermengen eindosiert werden, was wiederum zu Problemen beim Abguss aufgrund der erhöhten Gasmengen führt.

In der PCT/DE00/03324 wird ein weiteres 3D-Druckverfahren offenbart. Es handelt sich dabei um selektives Bedrucken von mit Binder vermischten Partikeln mit einem Aktivator, an das sich eine Gashärtung anschließt.

Vorteilhaft hierbei ist wiederum, dass gießereiübliche Materialien verwendet werden können.

Allerdings ist die Gashärtung bei diesem Verfahren aufwändig. Zum Teil sind gesundheitsgefährdende Stoffe wie $SO_2$ notwendig, so dass der apparative Aufwand sehr hoch und das sichere Bedienen der Vorrichtungen kostenintensiv wird.

Da vor dem Härtungsschritt nicht einmal ansatzweise eine Verfestigung des Bauteils stattfindet, kann es durch leichte Verschiebungen des Pulverbetts beim Beschichten zur Zerstörung des gesamten Bauteils kommen.

Ein weiteres 3D-Druckverfahren ist aus der DE 197 23 892 A1 bekannt. Hierbei handelt es sich um ein selektives Bedrucken von mit Binder umhüllten Partikeln, sogenannten Croningsand, mit Moderiermittel. Daran schließt sich wieder eine Härtung an, die gemäß der Offenbarung dieser Druckschrift über Strahlung erfolgt. Auch bei diesem Verfahren können vorteilhafter Weise gießereiübliche Materialien verwendet werden. Jedoch ist auch bei diesem Verfahren das Härten der Bauteile sehr kompliziert, denn der notwendige eng tolerierte Temperaturwechsel erfordert einen hohen apparativen Aufwand.

Bei dem in der DE 198 53 834 A1 offenbarten Verfahren, wiederum einem 3D-Druckverfahren, findet ein selektives Bedrucken von mit Binder besprühten Partikeln mit Härter statt. Auch hier können wieder flexibel gießereiübliche Materialien verwendet werden.

Die Nachteile dieses Verfahrens sind der komplizierte Sprühauftrag des Binders, die inhomogene Binderdurchmischung und die hohen Binderkonzentrationen im Bauteil.

Daneben ist aufgrund von Nebelbildung im Bauraum durch den Sprühvorgang ein hoher Verschmutzungsgrad der Anlage die Folge. Eine Folge davon ist, dass eine aufwändige Reinigung am Druckkopf erforderlich ist, da sonst ein Aushärten des Materials an den Düsen erfolgt und zu deren Zerstörung führt.

Ähnliche Nachteile weist das in der WO 01/72502 A1 beschriebene selektives Bedrucken von unbehandeltem Sand mit Binder und Härter auf.

Die WO 0134 371 offenbart ein Verfahren gemäß dem Oberbegriff des Anspruchs 1.

Ausgehend hiervon ist es Aufgabe der vorliegenden Erfindung ein Verfahren bereitzustellen, mit dem es möglich ist, den schichtweisen Aufbau von Modellen in möglichst zeitsparender und kostengünstiger Art und Weise durchzuführen. Daneben soll das Verfahren für den industriellen Einsatz aufgrund seiner Zuverlässigkeit und Bedienungsfreundlichkeit einsetzbar sein.

Diese Aufgabe wird gelöst mit einem Verfahren zum schichtweisen Aufbau von Modellen, wobei auf eine Bauplattform ein erstes Material und daran anschließend selektiv ein zweites Material jeweils schichtweise aufgetragen wird und diese beiden Auftragungsschritte wiederholt werden, bis ein gewünschtes Modell erhalten wird. Dazu bilden die beiden Materialien bei einem geeigneten Mischungsverhältnis einen Festkörper. Das erste Material hierbei ein Materialgemisch dar und wird zumindest teilweise "In-Prozeß" und vor dem jeweiligen Auftragungsschritt zubereitet. Das Materialgemisch weist ein Partikelmaterial und eine erste reaktive bzw. reaktionstreibende Materialkomponente und das zweite Material eine zweite reaktive Komponente auf. Das Aushärten eines Verbundes aus den Materialien erfolgt dabei aufgrund einer chemischen und/oder physikalischen Reaktion.

Dieses Vertahren hat sich als vorteilhaft erwiesen, da mit ihm Verarbeitungszeiten des Materialgemisches kurz gehalten werden können und so die leicht flüchtigen Inhaltsstoffe im Bindermaterial enthalten bleiben. Die Aufbereitung kann dabei bedarfsgemäß während des Auftragungsprozesses erfolgen.

Ein weiterer Vorteil dieser sogenannten "In-Prozess-Anmischung" besteht auch in der größeren Flexibilität. Es wird zum einen nur soviel Sand angemischt, wie tatsächlich gebraucht wird. Das bedeutet, dass falls der Prozess vorzeitig beendet wird, kein unnötiger Abfall entsteht. Sollte sich der Bauprozess durch zuladen von Bauteilen verlängern, entsteht nicht die Gefahr des Materialmangels aufgrund der anfänglich festgelegten Materialmenge. Zudem kann sogar während des Prozesses der Sand und die Rezeptur geändert werden. Der Nutzer muss sich damit nicht wie beim selektiven Lasersinter-Verfahren schon zu Beginn des Prozesses für eine Materialsorte für den gesamten Bauprozess entscheiden.

Ein weiterer Vorteil dieses Verfahrens im Vergleich zum selektiven Lasersintern ist die Verwendung von kostengünstigen Ausgangsstoffen im Gegensatz zu teuren Spezialsanden.

Gemäß einer bevorzugten Ausführungsform der vorliegenden Erfindung wird das Materialgemisch kontinuierlich zubereitet. Das bedeutet, dass das Gemisch immer in etwa gleich "alt" ist und damit die gleichen Eigenschaften bezüglich eventuell verdampfter Komponenten usw. aufweist.

Gemäß einer weiteren bevorzugten Ausführungsform des erfindungsgemäßen Verfahrens wird das Materialgemisch chargenweise zubereitet. Eine kontinuierliche Anmischung, wie sie bei konventionellen Formverfahren üblich ist, wäre zwar ebenfalls möglich, aufgrund der relativ geringen Verarbeitungsgeschwindigkeit während des Schichtaufbaus aber technisch aufwändig.

Gemäß der Erfindung weist das Materialgemisch ein Partikelmaterial und ein reaktives Material auf.

Weist dann bei dem erfindungsgemäßen Verfahren das zweite Material gemäß einer weiteren bevorzugten Ausführungsform einen Aktivator auf, dann kann ein Verbinden der Komponenten bei Raumtemperatur durch eine chemische Reaktion erfolgen.

Hierfür wäre es möglich dass das Aushärten des Materialverbundes aufgrund einer chemischen Reaktion der Materialien erfolgt. Ebenso wäre aber auch eine Aushärtung durch einen physikalische Reaktion zwischen den Materialien denkbar.

Vorzugsweise erfolgt bei dem erfindungsgemäßen Verfahren der erneute Schichtauftrag und das Auftragen des zweiten Materials innerhalb der Zeit, die zur Verfestigung der beiden Materialien benötigt wird. Dadurch kann eine Verfestigung innerhalb der Teilfläche und zur darunter liegenden Schicht und damit ein besserer Schichtenverbund erzielt werden.

Besonders gute Ergebnisse konnten erreicht werden, wenn beim Zubereiten des Materialgemisches eine Restporosität bestehen bleibt, da damit eine erhöhte Gasdurchlässigkeit einhergeht, die sich beim Guss vorteilhaft auswirkt. Zudem erreicht das zweite Material dann auch tiefer liegende Partikel, was zu einer bessern Durchhärtung führt.

Gemäß einer bevorzugten Ausführungsform des erfindungsgemäßen Verfahrens wird das zweite Material mittels Tröpfchenerzeugungstechnik aufgetragen. Diese Technik hat sich als sehr exakt, zuverlässig und einfach erwiesen.

Ein Auftragen des zweiten Materials mittels Dispenstechnik wäre jedoch ebenfalls denkbar.

Besonders gute Ergebnisse konnten erzielt werden, wenn das zweite Material eine nicht an der Härtereaktion beteiligte Trägerflüssigkeit aufweist, da mit einer solchen die Benetzung des Materialgemisches aus Partikelmaterial und der ersten reaktiven Komponente unabhängig von dem zur Reaktion notwendigen chemischen Mengenverhältnis eingestellt werden kann. Weiterhin besteht der Wunsch, unterschiedliche Schichtstärken verarbeiten zu können. Das bedeutet auch, dass der Härtereintrag pro Schicht eingestellt werden muss und das am besten unabhängig von der gewählten Auflösung des Härterauftrages.

Aus diesem Grund wird dem Härter eine nicht reaktive Trägerflüssigkeit beigemischt, mit deren Hilfe das gewünschte Mengenverhältnis eingestellt werden kann.

Vorzugsweise wird als Trägerflüssigkeit Ethanol verwendet. Es könnte aber auch andere Alkohole verwendet werden, selbst Wasser wäre einsetzbar. Ethanol ist deshalb vorteilhaft, weil es leicht flüchtig ist. Vor dem Abguss sollte aber möglichst die komplette Trägerflüssigkeit verflüchtigt sein, da sie einen Abguss negativ beeinflussen kann. Im Prozess selbst dampft bereits ein großer Teil des Ethanols von Schicht zu Schicht ab. Der Restgehalt kann in einem kurzen Ofenprozess (1 h bei mehr als 80°C) verdampft werden.

Ethanol hat zudem noch zwei weitere positive Effekte. Die Viskosität des zu dosierenden Mediums ist bei den dod (drop-on-demand)-Schreibköpfen ein beschränkender Faktor. Mit Ethanol kann die Viskosität des Härters herabgesetzt werden, so dass sich die Funktion der Druckköpfe verbessert.

Ohne einen Verdünner wäre eine dem chemischen Mengenverhältnis angepasste einzudosierende Härtermenge so gering, dass man von einer lokal stark begrenzten Härtung ausgehen muss. Zudem würde an dieser Stelle ein zu hoher Härtereintrag erfolgen, der die chemische Reaktion nachteilig beeinflussen würde und damit negative Auswirkungen auf die Festigkeit der Bauteile hätte.

Die Menge der Trägerflüssigkeit kann rechnerisch bestimmt werden:

Ist der gewünschte Massenanteil des Härters im Partikelmaterial $x_h$,

das Partikelmaterialgewicht pro Schicht $m_{s,1}$ dann berechnet sich die erforderliche Härtermenge $m_h$ zu:

$$m_h = m_{s,l} \cdot x_h$$

Ist zusätzlich die gewünschte Druckauflösung $r_p$ in dpi, das Volumen der Flüssigkeitstropfen $v_{f,d}$, die Baufeldfläche $A_b$, die Dichte des Härters $\rho_h$, dann berechnet sich der Volumenanteil der Trägerflüssigkeit $x_t$

$$x_t = \frac{m_h}{\left(\dfrac{r_p}{0{,}0254}\right)^2 \cdot v_{f,d} \cdot A_b \cdot \rho_h}$$

Wird als Partikelmaterial ein Formsand wie beispielsweise Quarzsand, Silikatsand, Chromitsand, Zirkonsand, Olivinsand, Schamottsand, Korundsand oder/und Carbonsand verwendet, können gute Ergebnisse bei den Modellen erreicht werden. Neuere Materialien wie synthetische Sande, beispielsweise Cerabeads, können Vorteile bei Spezialanwendungen aufweisen und sind ebenso verwendbar. Diese Partikelmaterialien können einzeln oder als Mischung eingesetzt werden.

Ebenso wäre es gemäß der Erfindung denkbar, dass das Partikelmaterial ein Polystyrolpulver , ein Polyamidpulver oder andere Polymer-Partikelmaterialien bzw. eine Mischung dieser Pulver aufweist.

Für das erste reaktive Material eignet sich besonders ein Furanharz oder/und ein Phenolharz.

Die erfindungsgemäß hergestellten Bauteile können vorzugsweise als Formen für den Metallguss oder zum Herstellen von Ausschmelzmodellen für den Metallguss verwendet werden.

Erfindungsgemäß wird das Partikelmaterial, vorzugsweise Quarzsand, mit einem geringen Anteil Kunstharz (Binder) und im Fall der Furan- und Phenolharze mit einem Härter im vorbestimmten Verhältnis entweder chargenweise oder kontinuierlich gemischt und anschließend zur einer Form verarbeitet. Typische Mischungsverhältnisse liegen zwischen 0,6 und 1,8 Gew.-% Kunstharzanteil im Quarzsand.

Konventionell erfolgt die Herstellung der Form üblicherweise in einem Schussautomaten durch Abformung von einem Werkzeug, teilweise erfolgt die Herstellung der Form auch von Hand. Die Härtung, das bedeutet das Verkleben der Sandpartikel zu einer festen Form erfolgt dann chemisch oder physikalisch durch Aushärten des Binders. Der Aushärteprozess kann durch Wärme unterstützt werden.

Ist die Form dann fertig gestellt, wird sie zum Guss vorbereitet. In der Regel werden mehrere Formteile wie Ober-, Unterkasten und Kerne montiert. Bei Bedarf werden die Formteile noch mit Schlichte versehen. Anschließend wird das flüssige Metall in den dafür vorgesehenen Einguss gegossen. Die hohe Temperatur der Schmelze führt zum Cracken des Kunstharzanteils im Sand, speziell in den Randzonen zur Schmelze hin. Das dabei entstehende Gas wird über die Porosität des Sandes nach außen abgeführt.

Damit unerwünschte Gaseinschlüsse vermieden werden, sollte die Binderkonzentration in der Form so gering wie möglich sein. Jedoch muss der Binderanteil ausreichen, um die mechanische Stabilität der Form auch unter dem Druck der Metallschmelze zu gewährleisten. Zudem sollen die Partikel solange gebunden werden, bis das Metall zumindest im Randbereich abgekühlt ist und eine sogenannte Gusshaut bildet.

Nach der Erstarrung des Metalls soll der Sand idealerweise möglichst ohne Einwirkung weiterer zugeführter Wärme oder mechanischer Hilfsmittel aus der Form rieseln.

Die Zielsetzung ist deshalb für den erfindungsgemäßen schichtweisen Herstellprozess ein möglichst kleiner aber ausreichender Bindergehalt im Partikelmaterial.

Weitere vorteilhafte Ausgestaltungen der vorliegenden Erfindung ergeben sich aus den Unteransprüchen sowie der nachfolgenden Beschreibung.

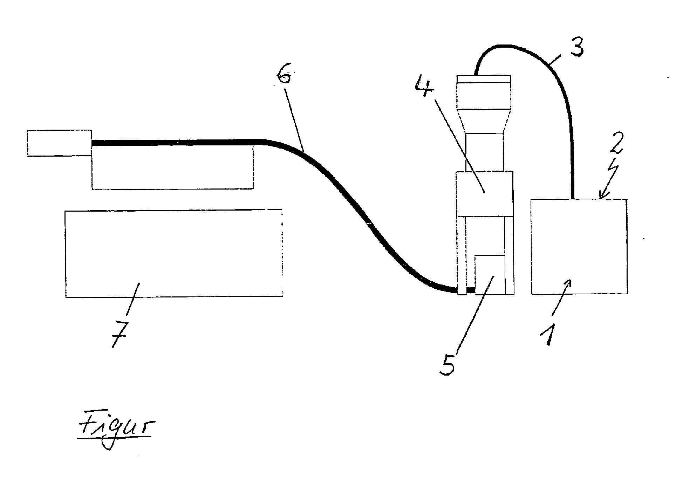

Zur näheren Erläuterung wird die Erfindung anhand bevorzugter Ausführungsbeispiele nachfolgend und unter Bezugnahme auf die Zeichnung näher beschrieben.

In der Zeichnung zeigt dabei die einzige Figur das Vormischen und Zuführen des vorgemischten Materials.

Beispielhaft soll im folgenden das erfindungsgemäße Verfahren und die erfindungsgemäße Vorrichtung für den Einsatz beim schichtweisen Aufbau von Gussmodellen aus Partikelmaterial, hier Gießereisand, Bindemittel und Härter bei einem Rapid-Prototyping-Verfahren erläutert werden.

Der mit Binder während der Auftragungsschritte angemischte Gießereisand wird auf eine Plattform in dünner Schicht (ca. 0,15 - 0,3 mm Schichtdicke) aufgetragen. Anschließend wird mittels eines Druckkopfs der Härter selektiv auf vorbestimmte Bereiche des Sandes aufgedruckt. Dies muss nicht notwendigerweise derart erfolgen, sondern könnte auch über eine andere Dosierung, wie zum Beispiel mit einem Siebdruckverfahren oder Ähnlichem durchgeführt werden.

Überall dort, wo der Härter in den Sand eindringt, startet eine chemische Reaktion und die Partikel verkleben miteinander lokal begrenzt, nämlich nur genau dort, wo Härter aufgebracht wurde. In den restlichen Bereichen findet keine Reaktion statt, mit Binder angemischter Quarzsand bleibt damit ungebunden. Im nächsten Schritt wird die Bauplattform um den entsprechenden Wert der Schichtstärke abgesenkt und der Prozess bestehend aus Auftragen des vorgemischten Sandes und Bedrucken mit Härter an ausgewählten Bereichen erfolgt von Neuem. Diese Prozess-Schleife wird solange wiederholt, bis die gewünschte Bauhöhe erreicht ist und das Bauteil fertig gestellt wurde. Dieses liegt nun eingebettet im ungehärteten Sand vor und muss lediglich vom umliegenden Sand befreit werden.

Als Binder wird gemäß des Beispiels ein gießereiübliches Kunstharz aus der Familie der Furanharze verwendet. Andere Harze wie zum Beispiel Phenolharze oder auch PU-Harze könnten ebenfalls eingesetzt werden.

Das Anmischen des mit Bindemittel versehenden Partikelmaterials erfolgt chargenweise während des Bauprozesses. Wobei darauf geachtet werden soll, dass die Charge aufgrund der leicht flüchtigen aber reaktionstreibenden Komponenten im Harz möglichst zeitnah verarbeitet wird. Ein großer Teil des Kunstharzes besteht aus Furfurylalkohol, der bereits bei Raumtemperatur einen sehr hohen Dampfdruck aufweist. Um eine ungewollte Reduktion dieser Komponenten im Harz zu vermeiden, wird eben auf eine zeitnahe Verarbeitung geachtet.

Die Bindermenge kann variiert werden und liegt vorzugsweise im Bereich von 0,6 - 1,5 Gew.-% des unbehandelten Partikelmaterials.

Als Härter wird gemäß dem beschriebenen Beispiels eine schwefelige Säure verwendet. Für eine ideale chemische Reaktion mit dem Bindemittel sollte der Anteil der schwefeligen Säure entsprechend den Vorgaben des Bindemittelherstellers im Bereich von 30 % bis 50 Gew. % des Bindemittelanteils betragen. Bei den genannten Bindemittelgewichtsanteilen müssten somit ca. 0,18 - 0,75 Gew. % des Sandes dosiert werden.

Die prozentualen Anteile des Härters in der Mischung haben bei dem erfindungsgemäßen Verfahren einen nicht zu vernachlässigenden Einfluss. Wird zu wenig Härter auf die mit dem Bindemittel vorgemischte Sandschicht eingebracht, verzögert sich die Reaktion oder startet bei Unterschreiten einer Mindestmenge gar nicht.

Wird dagegen zuviel Härter eingebracht kann das Bauteil überhärten. Auch dann nimmt die Festigkeit des hergestellten Bauteils rapide ab.

Wichtig ist zudem, dass der Härter an möglichst viele Kontaktflächen der Partikel gelangt und dort die chemische Reaktion mit dem Bindemittel startet. Zudem ist entscheidend, dass sich der Härter gut im Partikelmaterial verteilt. Eine lokale Härterüberdosierung kann nicht über die Fläche kompensiert werden und führt zur Verringerung der Festigkeit. Insofern ist es wichtig, dass der gesamte gewünschte Bereich von dem Härter in ausreichendem Maße und möglichst gleichmäßig bedruckt wird.

Die Härtermenge muss deshalb an das Schichtvolumen und die Binderkonzentration angepasst werden. Eine Mengensteuerung über die DOD-Druckköpfe ist nur in Grenzen erzielbar.

Die Tropfengröße ist bei diesen Systemen nämlich relativ fest durch die Gestaltung Design des Druckers bestimmt. Typischerweise kann man den Tropfendurchmesser des Härters im Bereich von 10 $\mu$m - ca. 200 $\mu$m wählen. In unserem Fall weisen die Tropfen ein Volumen von 180 pl auf. Zudem wird die Anzahl der Tropfen durch die gewünschte Auflösung bestimmt. Das heißt, passt man den Härtereintrag durch Veränderung der Tropfenanzahl an, kann die Qualität der hergestellten Bauteile, die maßgeblich durch die Druckauflösung bestimmt wird, leiden. Im schlimmsten Fall müssen die Tropfen so weit voneinander platziert werden, dass die Homogenität des Härtereintrages nicht mehr ausreicht, um den Binder über die gesamte gewünschte Fläche zu härten. Die Festigkeit des Bauteils würde sich dadurch deutlich verringern.

Die Problematik der Tropfengröße und Tropfenmenge wird durch den Wunsch verstärkt, unterschiedliche Schichtstärken verarbeiten zu können. Das bedeutet auch, dass der Härtereintrag pro Schicht eingestellt werden muss und das am besten unabhängig von der gewählten Auflösung.

Aus diesem Grund wird dem Härter eine nicht-reaktive Trägerflüssigkeit beigemischt, mit deren Hilfe das gewünschte Mengenverhältnis leichter eingestellt werden kann. Gemäß dem vorliegenden Beispiel ist die nicht-reaktive Trägerflüssigkeit Ethanol.

Im vorliegenden Beispiel errechnet sich die Menge Trägerflüssigkeit wie folgt:

Das Quarzsandgewicht pro Schicht beträgt 315 g;
Der Massenanteil des Binders im Quarzsand $x_b$ beträgt 1,0 Gew.-%;
Der Massenanteil des Härters im Quarzsand $x_h$ beträgt 0,5 Gew.-%;
Daraus ergibt sich eine rechnerische Härtermenge in der Schicht von 1,58 g;

Die gewünschte Druckauflösung $r_p$ beträgt 150 dpi,
das Tropfenvolumen $v_{f,d}$ beträgt 180 pl,
die Baufeldfläche $A_b$ beträgt 1,125 m$^2$,
die Dichte des Härters $\rho_h$ beträgt 1,206 kg / 1,
Damit ist der Volumenanteil des Härters an der Gesamtdosiermenge 18,5 %.

Mit Bezug auf die Figur wird beschrieben, wie das Vormischen und das Zuführen des vorgemischten Materials zum Beschichter gemäß einer bevorzugten Ausführungsform erfolgen kann.

Dafür wird eine bestimmte Menge unbehandeltes Partikelmaterial 1 aus einem sogenannten Big-Bag 2 entnommen und über eine Förderstrecke 3, beispielsweise einem Pneumatikförderer, einem Mischer 4 zugeführt. Dieser mischt das Partikelmaterial 1 in der Mischkammer z.B. über ein rotierendes Flügelrad in gegebener Rezeptur mit dem Kunstharzbindemittel und führt die erhaltene Charge einem sogenannten Vorlagebehälter 5 zu. Der Vorlagebehälter 5 ist mit einem Füllstandssensor ausgestattet und löst den Mischvorgang bei Unterfüllung aus. Ist zusätzlich am Vorlagebehälter ein elektromechanischer Vibrator vorgesehen, so kann eine Brückenbildung im Quarzsand, die ein häufiges Problem darstellt, vermieden oder zumindest deutlich verringert werden.

Das nun leicht klebrige, wie beschrieben vorgemischte Partikelmaterial wird über einen Schneckenförderer 6 je nach Anforderung des Beschichters 7 zu diesem befördert.

Dieses beschriebene System zeichnet sich durch eine vollständige Automatisierung aus und kann bei einem entsprechenden Partikelmaterialvorrat unterbrechungslos im Dauerbetrieb betrieben werden.

**Patentansprüche**

1. Verfahren zum schichtweisen Aufbau von Modellen, wobei auf eine Bauplattform ein erstes Material und daran anschließend selektiv ein zweites Material jeweils schichtweise aufgetragen wird und diese beiden Auftragungsschritte wiederholt werden, bis ein gewünschtes Modell erhalten wird, die beiden Materialien bei einem geeigneten Mischungsverhältnis einen Festkörper bilden und
das erste Material ein Materialgemisch darstellt, wobei das Materialgemisch ein Partikelmaterial und eine erste reaktive bzw. reaktionstreibende Materialkomponente aufweist, das zweite Material eine zweite reaktive Komponente aufweist und das Aushärten eines Verbundes aus den Materialien aufgrund einer chemischen und/oder physikalischen Reaktion erfolgt, **dadurch gekennzeichnet, dass** das Materialgemisch zumindest teilweise "In-Prozess" und vor dem jeweiligen Auftragungsschritt zubereitet wird.

2. Verfahren nach Anspruch 1,
**dadurch gekennzeichnet,**
**dass** das Materialgemisch kontinuierlich zubereitet wird.

3. Verfahren nach Anspruch 1,
**dadurch gekennzeichnet,**
**dass** das Materialgemisch chargenweise zubereitet wird.

4. Verfahren nach einem der vorhergehenden Ansprüche,
**dadurch gekennzeichnet,**
**dass** das zweite Material einen Aktivator aufweist.

5. Verfahren nach einem der vorhergehenden Ansprüche,
**dadurch gekennzeichnet,**
**dass** ein erneutes Auftragen des ersten und zweiten Materials vor Ablauf einer Verfestigungszeit der beiden Materialien erfolgt.

**6.** Verfahren nach einem der vorhergehenden Ansprüche,
**dadurch gekennzeichnet,**
**dass** beim Zubereiten des Materialgemisches eine Restporosität bestehen bleibt.

**7.** Verfahren nach einem der vorhergehenden Ansprüche,
**dadurch gekennzeichnet,**
**dass** das zweite Material mittels Tröpfchenerzeugungstechnik aufgetragen wird.

**8.** Verfahren nach einem der vorhergehenden Ansprüche,
**dadurch gekennzeichnet,**
**dass** das zweite Material mittels Dispenstechnik aufgetragen wird.

**9.** Verfahren nach einem der vorhergehenden Ansprüche,
**dadurch gekennzeichnet,**
**dass** das zweite Material eine Trägerflüssigkeit aufweist.

**10.** Verfahren nach einem der vorhergehenden Ansprüche,
**dadurch gekennzeichnet,**
**dass** das Partikelmaterial einen Formsand ausgewählt aus der Gruppe der Quarzsande, Zirkonsande, Olivinsande, oder/und Schamottsande aufweist.

**11.** Verfahren nach einem der vorhergehenden Ansprüche,
**dadurch gekennzeichnet,**
**dass** das Partikelmaterial ein Polystyrolpulver oder/und ein Polyamidpulver und/oder ein anderes Polymerpulver aufweist.

**12.** Verfahren nach einem der vorhergehenden Ansprüche,
**dadurch gekennzeichnet,**
**dass** das erste reaktive Material ein Furanharz oder/und ein Polyurethanharz aufweist.

**13.** Verwendung des Verfahrens nach einem der Ansprüche 1 bis 12 zum Herstellen von Bauteilen als Formen für den Metallguss.

**14.** Verwendung des Verfahrens nach einem der Ansprüche 1 bis 12 zum Herstellen von Ausschmelzmodellen für den Metallguss.

**Claims**

**1.** A method for the layered construction of models, said method comprising the coating of a first material, followed by the selective coating of a second material, onto a construction platform, both coating steps being carried out layer-wise and both coating steps being repeated until a desired model is obtained, both materials forming a solid at a suitable mixing ratio, and the first material being a material mixture, said material mixture comprising a particulate material and a first reactive or reaction-promoting material component, said second material comprising a second reactive component, and the solidification of a compound formed from said materials taking place due to a chemical and/or physical reaction, **characterised in that** said material mixture is prepared at least partly "in process" and before each respective coating step.

**2.** The method according to claim 1, **characterised in that** the material mixture is prepared in a continuous manner.

**3.** The method according to claim 1, **characterised in that** the material mixture is prepared in a discontinuous manner.

**4.** The method according to any one of the preceding claims, **characterised in that** the second material comprises an activator.

**5.** The method according to any one of the preceding claims, **characterised in that** renewed coating of the first and second materials is carried out prior to expiration of a solidification time of both materials.

**6.** The method according to any one of the preceding claims, **characterised in that** a residual porosity remains during preparation of the material mixture.

**7.** The method according to any one of the preceding claims, **characterised in that** the second material is coated by means of a droplet forming technique.

**8.** The method according to any one of the preceding claims, **characterised in that** the second material is coated by means of a dispensing technique.

**9.** The method according to any one of the preceding claims, **characterised in that** the second material comprises a carrier liquid.

**10.** The method according to any one of the preceding claims, **characterised in that** the particulate material comprises a mould sand, selected from the group consisting of quartz sands, zircon sands, olivine sands or/and fireclay sands.

**11.** The method according to any one of the preceding claims, **characterised in that** the particulate material comprises a polystyrene powder or/and a polyamide powder and/or another polymer powder.

**12.** The method according to any one of the preceding claims, **characterised in that** the first reactive material comprises a furan resin or/and a polyurethane resin.

**13.** Use of the method according to any one of claims 1 to 12 for the preparation of components as moulds for metal casting.

**14.** Use of the method according to any one of claims 1 to 12 for the preparation of investment patterns for metal casting.

## Revendications

**1.** Procédé pour la constitution de modèles par couches, dans lequel procédé un premier matériau et puis, sélectivement, un deuxième matériau est revêtu sur une plateforme de construction, tous les deux étapes de revêtement étant effectués couche par couche et étant répétés jusqu'à obtenir un modèle désiré, les deux matériaux mélangés à un rapport approprié constituant un solide, et le premier matériau étant un mélange de matériaux comprenant un matériau en particules et un premier composant réactif ou faisant progresser une réaction, ledit deuxième matériau comprenant un deuxième composant réactif, et la solidification d'un composite desdits matériaux par réaction chimique et/ou physique, **caractérisé en ce que** ledit mélange de matériaux est préparé au moins partiellement « en procédé » et avant chaque étape de revêtement respectif.

**2.** Procédé selon la revendication 1, **caractérisé en ce que** le mélange de matériaux est préparé en continu.

**3.** Procédé selon la revendication 1, **caractérisé en ce que** le mélange de matériaux est préparé en discontinu.

**4.** Procédé selon l'une quelconque des revendications précédentes, **caractérisé en ce que** le deuxième matériau comprend un activateur.

**5.** Procédé selon l'une quelconque des revendications précédentes, **caractérisé en ce que** l'on effectue de nouveau un revêtement des premier et deuxième matériaux avant l'écoulement d'un temps de solidification des deux matériaux.

**6.** Procédé selon l'une quelconque des revendications précédentes, **caractérisé en ce qu'**il y a une porosité résiduelle lors de la préparation du mélange de matériaux.

**7.** Procédé selon l'une quelconque des revendications précédentes, **caractérisé en ce que** le deuxième matériau est revêtu au moyen d'une technique de formation de gouttelettes.

**8.** Procédé selon l'une quelconque des revendications précédentes, **caractérisé en ce que** le deuxième matériau est revêtu au moyen d'une technique de distribution.

**9.** Procédé selon l'une quelconque des revendications précédentes, **caractérisé en ce que** le deuxième matériau comprend un liquide porteur.

**10.** Procédé selon l'une quelconque des revendications précédentes, **caractérisé en ce que** le matériau en particules comprend un sable de fonderie, qui est choisi dans le groupe comprenant les sables de quartz, de zircon, d'olivine ou/et de chamotte réfractaire.

**11.** Procédé selon l'une quelconque des revendications précédentes, **caractérisé en ce que** le matériau en particules comprend une poudre de polystyrène ou/et une poudre de polyamide et/ou une autre poudre polymérique.

**12.** Procédé selon l'une quelconque des revendications précédentes, **caractérisé en ce que** le premier matériau réactif comprend une résine furanique ou/et une résine de polyuréthane.

**13.** Utilisation du procédé selon l'une quelconque des revendications 1 à 12 pour la préparation de composants en forme de moules pour la coulée de métaux.

**14.** Utilisation du procédé selon l'une quelconque des revendications 1 à 12 pour la préparation de modèles fusibles pour la coulée de métaux.

Figur

**IN DER BESCHREIBUNG AUFGEFÜHRTE DOKUMENTE**

**In der Beschreibung aufgeführte Patentdokumente**

- DE 19853834 A1
- EP 0711213 B1
- US 5204055 A
- EP 0431924 B1
- DE 0003324 W
- DE 19723892 A1
- WO 0172502 A1
- WO 0134371 A